# EUROPEAN PATENT SPECIFICATION

(11) **EP 2 460 702 B1**
(45) Date of publication and mention of the grant of the patent: **27.11.2013**
(21) Application number: 10803951.2
(22) Date of filing: 29.07.2010
(51) Int. Cl.: B60T 7/10

(54) **ACTUATING ROD FOR THE HAND BRAKE OF A MOTOR VEHICLE**
BETÄTIGUNGSSTANGE FÜR DIE HANDBREMSE EINES MOTORFAHRZEUGS
BARRE D'ACTIONNEMENT POUR FREIN À MAIN D'UN VÉHICULE AUTOMOBILE

(30) Priority: 30.07.2009 ES 200930330 U
(43) Date of publication of application: 06.06.2012
(73) Proprietor: Edscha Engineering GmbH, 42855 Remscheid (DE)
(72) Inventor: GUTIÉRREZ FERNÁNDEZ, José Manuel, E-39610 El Astillero (Cantabria) (ES)
(74) Representative: Ungria López, Javier
(86) International application number: PCT/ES2010/070529
(87) International publication number: WO 2011/012762

(56) References cited:
- EP-A1- 1 650 092
- WO-A2-2004/087476
- DE-A1- 4 321 610
- DE-A1- 10 027 019
- DE-A1-102007 053 463
- DE-U1- 20 107 646
- DE-U1-202004 012 564
- ES-T3- 2 074 833
- ES-T3- 2 206 369
- US-A- 6 073 513

## Description

### OBJECT OF THE INVENTION

The present invention, as it is expressed in the statement of this specification, relates to an actuating rod for the hand brake of a motor vehicle, envisaged to relate to the traction lever through which the effectiveness or ineffectiveness of the hand brake of the vehicle is established.

The object of the invention is to significantly reduce the noise that occurs in the actuation of the traction lever of the hand brake on motor vehicles.

### BACKGROUND OF THE INVENTION

Currently, in certain types of vehicles the operational or actuating mechanism of the hand brake is constituted from a lever mounted in a swing way with respect to a fixed support anchored in the bodywork of the vehicle, which support is equipped with a toothed sector wherein is interlockable a nail or ratchet belonging to a piece mounted on a rotational way on the own actuating lever and linked by its opposite end to that of the nail to a rod with oscillating rectilinear motion, which is displaceable in the interior of the own lever. The rod is finished up by its anterior end and externally in a push button whereby and against the action of a spring the displacement of the rod is carried out, consequent swing of the carrier piece of the nail or ratchet and the release of this with respect to the toothed sector established in the fixed support, so this release allows to carry out the swing of the lever and corresponding actuation on the hand brake towards the inoperative position of the same, as in the swing in the opposite sense of such lever occurs the actuation of the hand brake towards its operational position, remaining in this position precisely by the interlocking produced of the nail on the toothed sector, since such nail tends to swing towards the interlocking position by the push of the rod into the interior, by the force exerted in that sense by the spring linked to it.

Well, in this type of mechanism the oscillating rectilinear motion of the rod from the position in which the nail is located on the ridge of a tooth of the toothed sector to the interlocking position, is significant, which leads to a remarkable increase in the compression strength of said spring, with the consequent transmission of force to the nail or ratchet and thereby a significant accumulation of kinetic energy in this, that translates into noise at the impact of the nail on the valley of the corresponding tooth in every interlocking of it on the toothed sector.

DE 20 2004 012 564 U1 discloses a plastic actuating rod mounted in a hand brake actuation lever. The rod includes a spring and a push button at one end and a toothed pawl and ratchet assembly at the other end and the hand brake actuation lever consists of the plastic actuating rod mounted in a housing.

This energy of impact on the nail or ratchet is sent back to the mechanism in the form of vibrations, being returned to the own rod and therefore to the spring, producing effects of resonance with additional noises that are perceived by the user through the handle of the actuation lever, such that the resonance caused by the vibration and noise produced are increased because the rod is metallic and is in contact with metallic elements constitutive of the actuation lever, nail or ratchet piece and toothed sector itself.

### DESCRIPTION OF THE INVENTION

The actuating rod object of the invention has been designed to solve the problems and shortcomings referred to in the preceding paragraph.

Accordingly, the rod in question is characterized primarily by being made in plastic material, and on it is located the corresponding compression spring, causing that it is isolated from the metal parts of the assembly of the mechanism.

In addition, the rod of the invention, in its straight-ahead slide, is guided on a guide-piece, also plastic, with features in a way such that on one side it embraces a section of the rod and on the other it surrounds the spring to prevent that it slips out from its location or housing established for that purpose in the own rod, allowing it to slide smoothly and without backlashes.

This guide-piece fits into the corresponding traction or actuation lever, being fixed to it in virtue of that the guide-piece has externally complementary shoulders of entrants provided for this purpose on said lever, to establish the interlocking and fixing of both parts to each other, allowing the sliding of the rod with respect to such guide-piece, when acting on the respective push button envisaged in its anterior or external end.

On the other hand, it has been envisaged that the rod is provided with a calibrated stop and situated at a determined and optimal distance, which is in contact with the guide-piece with respect to which the rod slides when the set or desired push stroke of the button ends. At that time of stop, the displacement of the rod is blocked forming a compact assembly that does not transmit force to the corresponding nail or ratchet linked to the opposite end of the rod, so that said non-transmission of force is due to that the produced reaction is absorbed by the actuation lever, at the front part close to the push button.

The linking of the carrier piece of the nail or ratchet at the end of the rod is performed as it is conventional, through a coupling by way of ball joint between both parts, for which at the end of the rod is established a concave grooving on which the arched and flat edge of the carrier piece of the nail or ratchet is positioned and retained, this provided at the opposite end. Said piece of the nail or ratchet is affected with a hole for an articulation pin of the same on the actuation lever of the brake.

Another feature of novelty of the invention is focused on that the nail or ratchet is distanced from the swing point to a greater extent than the one existing between such swing point and the linkage end or ball joint of the rod, producing a demultiplier effect such that a movement of the tip or end of the nail or ratchet translates into a very small movement in the rod, producing a minimum compression in the spring.

The teeth of the toothed sector have a geometry such that the angular oscillation of the nail or ratchet is very limited, and that is a result of the reduced distance between the ridge of the teeth and the opposite flank of the adjacent tooth.

Such feature establishes that the oscillating rectilinear motion of the rod from the position of the nail in the ridge to the interlocking position of such nail is very small compared to the oscillation produced in conventional mechanisms, so the compression of the spring produced by this oscillation is also very small.

Based on what it has been discussed, the spring will have an initial compression force calibrated to the required force for its use and safe operation of the retention system, since it is compressed with little oscillation load, barely increasing the force when it reaches the point of maximum compression in which the edge of the nail or ratchet and in the ridge of the tooth corresponding to the toothed sector are aligned, keeping almost constant the force applied to the nail.

Based on this feature or improvement for the invention, is achieved reducing the energy stored in the spring that is transmitted to the nail at the time of triggering thereof, from the ridge of the tooth to the impact against the opposite flank of the teeth of the segment, such that the kinetic energy of the nail at the moment of impact is very small, so the transformation of said energy in noise is lower, and the sound effect is significantly reduced.

The energy of the nail or ratchet after the impact is returned to the mechanism due to the versatility of materials in the form of vibrations, contrary to what happens in conventional systems where the vibrations return to the rod and thus to the spring.

Finally, say that the spring in its mounting on the rod is completely isolated from metal parts that are likely to resonate with vibrations, as it has been already mentioned in the section on Background of the invention, which provides a break of the bridge of transmission of vibrations.

The advantages deriving from the new conception of the rod described with respect to those provided for in conventional systems can be summarized in the following:
- Reduction of the noise of the impact of the nail or ratchet against the toothed segment.
- Isolation of the spring against the vibrations produced by the impact of the nail or ratchet-segment, avoiding the resonance of the same.
- Reduction of mass of all the components, improving the speed of coupling of the mechanism to reduce the inertia of all moving parts. This effect enhances security when it comes to a bad use of the hand brake by the user, if an untimely deactivation of the brake lever is performed; reducing the time it takes the nail or ratchet to interlock again.
- Reduction of costs of production of the actuation assembly of the rod-push button.
- Ease of setting of the rod-push button-nail or ratchet assembly.
- Substantial improvement of the process due to the decrease in the number of components for the same function.

### BRIEF DESCRIPTION OF THE DRAWINGS

To complement the description and with the object of helping to a better understanding of the features of the invention, the present description is accompanied by a set of drawings based on which the innovations and advantages of the actuation rod for the vehicle hand brake will be more easily understood made in accordance with the object of the invention.
**Figure 1****.**- Shows a view according to a lateral perspective of the rod of the invention and the spring and the guide-piece exploded in a position to be mounted on it.

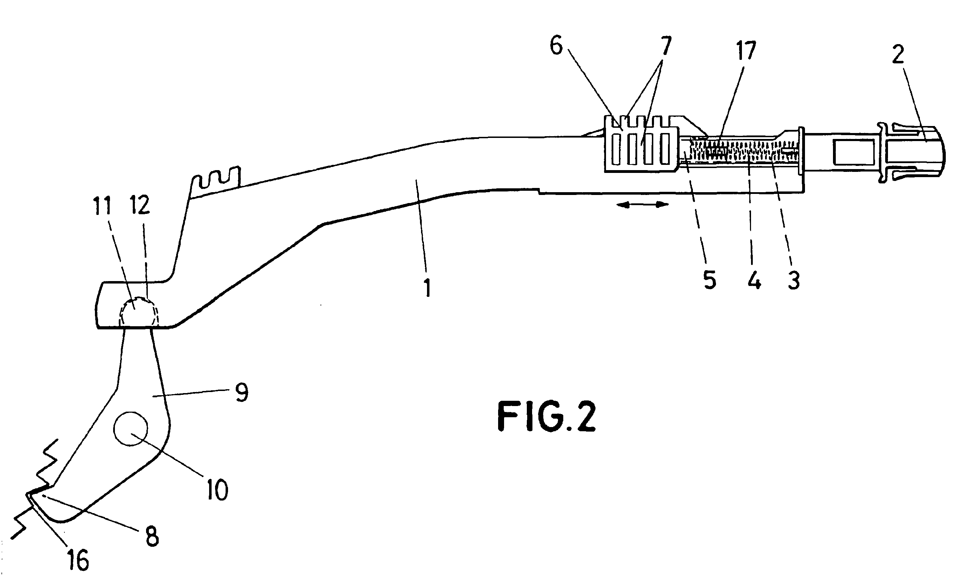

**Figure 2**.- Shows an elevational side view of the assembly shown in the previous figure, with all components properly assembled and connected to the rear end of the rod the carrier swing piece of the interlocking nail on the corresponding toothed sector anchored to the chassis of the vehicle.
**Figure 3**.- Shows an enlarged detail of the shape of the teeth of the toothed sector and the nail itself or interlocking ratchet, as well as the angle of oscillation of such nail or ratchet.

### DESCRIPTION OF THE PREFERRED EMBODIMENT

As it can be seen in the figures referred to above, the rod 1 of the invention consists of an elongated body made of plastic material at the end, considered as anterior, of which includes a push button 2 and in a section more interior to the same a longitudinal housing 3 wherein is housed a spring 4 that is retained between the anterior end 3' of that housing and a pin 5 provided in the front part of a guide-piece 6 mounted on that section of the rod 1 corresponding to the housing 3, embosoming the same and wrapped around the spring 4 to prevent that this slips out from its housing 3.

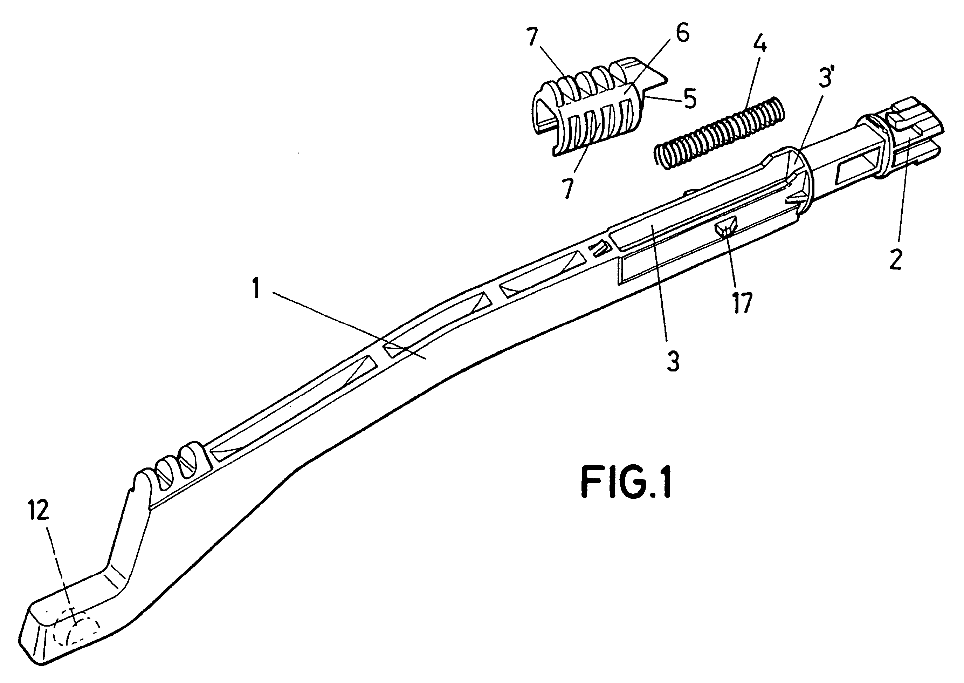

The guide-piece 6 has a special configuration as it can be seen in figure 1, and is provided on the outside with shoulders 7 which are complementary of others provided for this purpose on the corresponding actuation lever on which is mounted said rod 1, so that the latter is axially displaceable by pressing the button 2 with respect to the guide-piece 6. In this way the spring 4 that is retained in the housing 3, between the bottom 3' of it and the pin 5 of the piece 6, does not make contact with any metallic element since the rod 1 as a whole is plastic, as it is the own piece 6, that spring 4 being isolated from the vibrations that can occur at the impact of the corresponding interlocking nail or ratchet 8 on the toothed sector 16 corresponding to a conventional hand brake, such that said isolation from the vibrations prevents that resonance can be produced as it occurs conventionally.

The nail or ratchet 8 is provided at the end of a piece 9 with a hole 10 with swivel mounting on the corresponding actuation lever, while the end opposite to the nail or ratchet 8 has an arched conformation, flat on the sides, that fits and establishes the assembling means in a concave housing 12 established in the own end of the rod 1 so the sliding in one way or another of the rod 1, carries with it the swinging of the piece 9 to establish the interlock or release of the nail or ratchet 8 with respect to the toothed sector 16.

The rod 1 and laterally to the housing 3 has a calibrated stop 17 as it is represented in figure 1, establishing a limit of displacement of such rod 1 with respect to the guide-piece 5, thus limiting the displacement or push stroke of the button 2. At that time when the stop 17 makes contact with the guide-piece 6, the displacement of the rod 1 is blocked, forming a compact block without transmission of force towards the nail or ratchet 8, since all the reaction is absorbed by the corresponding actuation lever at the front, close to the push button 2.

The distance of the nail or ratchet 8 with respect to the swing point established in the hole 10 is longer than the distance between that swing point 10 and the end 11 of attachment to the own rod 1, giving rise to a demultiplier effect between the end of the nail or ratchet 8 and the articulation with the rod 1, producing a minimum compression on the spring 4 and therefore a minimization of noise.

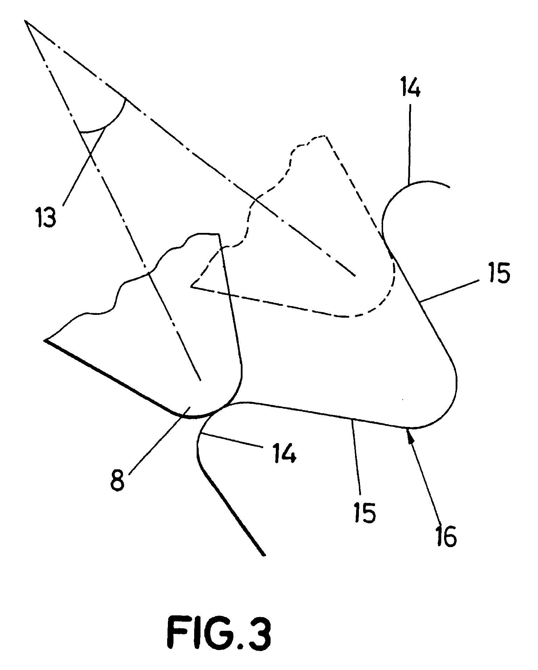

In turn, the teeth of the toothed sector 16 have a special geometry, as it is that of the nail or ratchet 8, which allow to produce an angular oscillation, indicated by the angle 13 of figure 3, very small, because the distance existing between the ridge 14 of the teeth corresponding to the toothed sector 16 and the flat area or opposite flank 15 of the adjacent tooth, is very small, as it can be seen clearly in figure 3.

That oscillation movement is in turn demultiplied, as stated above, due to the relationship of levers established between the swing point established in the hole 10 and the ends corresponding to that of the linking 11 to the rod 1 and that of the own nail or ratchet 8, converting the rotary motion into rectilinear, and reducing the effect of noise.

As it has been already stated previously throughout this specification, the oscillating rectilinear motion of the rod 1 from the position of the nail or ratchet 8 on the ridge 14 to the position of interlock between two teeth of the toothed sector 16, is very small in comparison with the oscillation produced in conventional actuation systems of the same type, so the compression of the spring 4 produced by said oscillation will be also very small, so the initial compression force of the spring is barely increased when the point of maximum compression is reached, in which the corresponding ridge 14 of the toothed sector 16 and the nail or ratchet 8 are faced as it is represented in figure 3, all of this getting a reduction of the energy stored in the spring 4, such that the kinetic energy of the nail or ratchet 8 at the moment of impact will be very small, so the transformation of said energy or noise will be lower, totally reducing the sound effect.

In addition, that energy after the impact of the nail or ratchet 8 is returned to the mechanism by the elasticity of the materials, the rebound vibration of the nail or ratchet 8 being absorbed by the plastic material of the rod 1, preventing it from being transferred to the spring and that it resonates, collaborating on this the fact that said spring 4 is completely isolated from metallic pieces susceptible to resonate with vibrations, as conventionally occurs.

## Claims

1. Actuating rod for the hand brake of a motor vehicle, being mounted with faculty of rectilinear and oscillation motion in the corresponding actuation lever of the hand brake, and the rod of which includes in its anterior end a push button against a compression spring, while at its opposite end it relates to one of the ends of a piece mounted in a swing way on the own actuation lever, said swing piece having at its other end a nail or ratchet interlockable between two consecutive teeth of a toothed sector provided on a static support, **characterized in that** it consists of an elongated body (1) of plastic material, with an axial housing (3) in proximity to the anterior end corresponding to the push button (2), in the housing (3) of which is mounted the compression spring (4), making contact with its ends in the anterior and extreme wall (3') of the housing (3), while at the other end of said spring (4) makes contact with a pin (5) provided for this purpose on a plastic guide-piece (6), over which the rod (1) slides in its rectilinear displacement, such guide-piece (6) being anchored on the own actuation lever.

2. Actuating rod for the hand brake of a motor vehicle, according to claim 1, **characterized in that** the guide-piece (6) has a surrounding configuration of a section of the rod (1), corresponding to the section of embodiment of the housing (3), allowing the sliding of said rod (1) with respect to said guide-piece (6) and the retention by this of the spring (4) in its corresponding housing (3).

3. Actuating rod for the hand brake of a motor vehicle, according to claim 2, **characterized in that** the guide-piece (6) externally has complementary shoulders (7) of entrants established for that purpose on the actuation lever for the fixation and retention of both pieces to each other.

4. Actuating rod for the hand brake of a motor vehicle, according to previous claims, **characterized in that** the rod (1) in the section corresponding to the housing (3) for the spring (4) has laterally a stop (17) which establishes the limit of displacement of said rod (1) with respect to the guide-piece (6).

5. Actuating rod for the hand brake of a motor vehicle, according to claim 1, **characterized in that** the rear end of the rod (1) has a concave bottom cavity (12) in which is located, as a ball joint, the end of a swing piece (9) provided at its opposite end with the nail or ratchet (8) interlockable in one of the teeth of the sector toothed (16) mounted statically on the bodywork of the vehicle, with the particularity that this swing piece (9) is provided with a hole (10) in an intermediate zone for an articulation and swivelling pin of the own piece (9) with respect to the actuation lever.

6. Actuating rod for the hand brake of a motor vehicle, according to claim 1, **characterized in that** the distance of the nail or ratchet (8) with regard to the swing point established in the hole (10) of the piece (9), is greater than the distance from said swing point and the point of assembly (11) or ball joint of said piece (9) on the end of the rod (1), producing a demultiplier effect between the levers established between said points and thus reducing the compression of the spring (4).

7. Actuating rod for the hand brake of a motor vehicle, according to claim 1, **characterized in that** the distance between the ridge (14) of the teeth corresponding to the toothed sector (16) and the flat area of the opposite flank (15) of the adjacent tooth is very small, minimizing the oscillating rectilinear motion of the rod (1).

## Patentansprüche

1. Betätigungsstange für die Handbremse eines Motorfahrzeugs, die mit der Fähigkeit zur geradlinigen und schwingenden Bewegung im entsprechenden Betätigungshebel der Handbremse aufgenommen ist, deren Stange an ihrem Vorderende einen Druckknopf gegen eine Druckfeder umfasst, wohingegen sie an ihrem gegenüberliegenden Ende mit einem Ende der Enden eines Stückes in Verbindung gebracht ist, das schwenkend am eigenen Betätigungshebel aufgenommen ist, wobei das Schwenkstück an seinem anderen Ende einen Nagel oder eine Sperre aufweist, die zwischen zwei aufeinanderfolgenden Zähnen eines verzahnten Bereichs arretierbar sind, der bei einer feststehenden Abstützung vorgesehen ist, **dadurch gekennzeichnet, dass** sie aus einem länglichen Körper (1) aus einem Kunststoffwerkstoff mit einem Axialgehäuse (3), das dem dem Druckknopf (2) entsprechenden Vorderende benachbart ist, besteht, in dessen Gehäuse (3) die Druckfeder (4) aufgenommen ist, die mit ihren Enden die vordere und äußerste Wand (3') des Gehäuses (3) kontaktiert, wohingegen das andere Ende der Feder (4) einen Stift (5) kontaktiert, der zu diesem Zweck an einem Kunststoffführungsstück (6) vorgesehen ist, über das die Stange (1) bei ihrer geradlinigen Verschiebung gleitet, wobei das Führungsstück (6) am eigenen Betätigungshebel verankert ist.

2. Betätigungsstange für die Handbremse eines Motorfahrzeugs gemäß Anspruch 1, **dadurch gekennzeichnet, dass** das Führungsstück (6) eine Umgebungskonfiguration mit einem Abschnitt der Stange (1) aufweist, die dem Abschnitt einer Verkörperung des Gehäuses (3) zugehörig ist, die das Gleiten der Stange (1) gegenüber dem Führungsstück (6) und die das Halten der Feder (4) in ihrem zugehörigen Gehäuse (3) durch diese erlaubt.

3. Betätigungsstange für die Handbremse eines Motorfahrzeugs gemäß Anspruch 2, **dadurch gekennzeichnet, dass** das Führungsstück (6) äußerlich ergänzende Teilnehmerschultern (7) aufweist, die zu diesem Zweck am Betätigungshebel zur Festlegung und zum Halten beider Stücke miteinander eingerichtet sind.

4. Betätigungsstange für eine Handbremse eines Motorfahrzeugs gemäß irgendeinem der vorhergehenden Ansprüche, **dadurch gekennzeichnet, dass** die Stange (1) im dem dem Gehäuse (3) für die Feder (4) zugehörigen Abschnitt in Längsrichtung einen Anschlag (17) aufweist, der eine Verschiebegrenze der Stange (1) bezüglich des Führungsstücks (6) einrichtet.

5. Betätigungsstange für die Handbremse eines Motorfahrzeugs gemäß Anspruch 1, **dadurch gekennzeichnet, dass** das rückwärtige Ende der Stange (1) eine konkave untere Ausnehmung (12) aufweist, in der, in Form einer Kugelverbindung, das Ende eines Schwenkstücks (9) angeordnet ist, das an seinem gegenüberliegenden Ende mit dem Nagel oder der Sperre (8) versehen ist, die bei einem der Zähne des verzahnten Bereichs (16) verriegelbar sind, der fest am Aufbau des Fahrzeugs aufgenommen ist, mit der Besonderheit, dass dieses Schwenkstück (9) in einem mittleren Bereich mit einem Loch (10) für einen Gelenk- und Schwenkstift des eigenen Stücks (9) gegenüber dem Betätigungshebel versehen ist.

6. Betätigungsstange für die Handbremse eines Motorfahrzeugs gemäß Anspruch 1, **dadurch gekennzeichnet, dass** der Abstand des Nagels oder der Sperre (8) bezüglich des in dem Loch (10) des Stücks (9) eingerichteten Schwenkpunkts größer als der Abstand von diesem Schwenkpunkt und dem Punkt des Zusammenbaus (11) oder der Kugelverbindung des Stücks (9) am Ende der Stange (1) ist, was eine Untersetzungswirkung zwischen den zwischen diesen Punkten eingerichteten Hebeln erzeugt und folglich den Druck der Feder (4) reduziert.

7. Betätigungsstange für die Handbremse eines Motorfahrzeugs gemäß Anspruch 1, **dadurch gekennzeichnet, dass** der Abstand zwischen dem Rücken (14) des Zahns, der dem verzahnten Bereich (16) zugehörig ist, und dem Flachbereich der gegenüberliegenden Flanke (15) des benachbarten Zahns sehr klein ist, was die schwingende geradlinige Bewegung der Stange (1) minimiert.

## Revendications

1. Tige d'actionnement pour le frein à main d'un véhicule à moteur, qui est montée avec la capacité d'un mouvement rectiligne et d'oscillation dans le levier d'actionnement correspondant du frein à main, et dont la tige comprend dans son extrémité antérieure un bouton poussoir contre un ressort de compression, alors qu'à son extrémité opposée elle correspond à une des extrémités d'une pièce montée d'une manière oscillante sur le levier d'actionnement, ladite pièce oscillante ayant à son autre extrémité un doigt ou un cliquet pouvant être bloqué entre deux dents consécutives d'un secteur denté prévu sur un support statique, **caractérisée en ce qu'**elle se compose d'un corps allongé (1) en matière plastique, avec un logement axial (3) à proximité de l'extrémité antérieure correspondant au bouton poussoir (2), le ressort de compression (4) étant monté dans le logement (3), en établissant un contact avec ses extrémités dans la paroi antérieure et extrême (3') du logement (3), tout en réalisant à l'autre extrémité dudit ressort (4) un contact avec un axe (5) prévu à cet effet sur une pièce de guidage en matière plastique (6), au-dessus de laquelle la tige (1) coulisse dans son déplacement rectiligne, cette pièce de guidage (6) étant ancrée sur le levier d'actionnement.

2. Tige d'actionnement pour le frein à main d'un véhicule à moteur, selon la revendication 1, **caractérisée en ce que** la pièce de guidage (6) a une configuration environnante d'une section de la tige (1), correspondant à la section de forme de réalisation du logement (3), permettant le coulissement de ladite tige (1) par rapport à ladite pièce de guidage (6) et la retenue par celle-ci du ressort (4) dans son logement correspondant (3).

3. Tige d'actionnement pour le frein à main d'un véhicule à moteur, selon la revendication 2, **caractérisée en ce que** la pièce de guidage (6) a à l'extérieur des épaulements complémentaires (7) d'éléments entrants établis dans ce but sur le levier d' actionnement pour la fixation et la retenue des deux pièces l'une sur l'autre.

4. Tige d'actionnement pour le frein à main d'un véhicule à moteur, selon les revendications précédentes, **caractérisée en ce que** la tige (1) dans la section correspondant au logement (3) pour le ressort (4) a de manière latérale une butée (17) qui établit la limite de déplacement de ladite tige (1) par rapport à la pièce de guidage (6).

5. Tige d'actionnement pour le frein à main d'un véhicule à moteur, selon la revendication 1, **caractérisée en ce que** l'extrémité arrière de la tige (1) a une cavité inférieure concave (12) dans laquelle se trouve, comme joint à rotule, l'extrémité d'une pièce oscillante (9) pourvue à son extrémité opposée d'un doigt ou cliquet (8) pouvant être bloqué dans une des dents du secteur denté (16) monté de manière statique sur la carrosserie du véhicule, avec la particularité que cette pièce oscillante (9) est pourvue d'un trou (10) dans une zone intermédiaire pour un axe d'articulation et de pivotement de la partie (9) par rapport au levier d'actionnement.

6. Tige d'actionnement pour le frein à main d'un véhicule à moteur, selon la revendication 1, **caractérisée en ce que** la distance du doigt ou cliquet (8) par rapport au point d'oscillation établi dans le trou (10) de la partie (9), est plus grande que la distance par rapport audit point d'oscillation et au point d'assemblage (11) ou au joint à rotule de ladite partie (9) sur l'extrémité de la tige (1), en produisant un effet démultiplicateur entre les leviers établis entre lesdits points et en réduisant ainsi la compression du ressort (4).

7. Tige d'actionnement pour le frein à main d'un véhicule à moteur, selon la revendication 1, **caractérisée en ce que** la distance entre le sommet (14) des dents correspondant au secteur denté (16) et la zone plate du flanc opposé (15) de la dent adjacente est très petite, ce qui minimise le mouvement rectiligne d'oscillation de la tige (1) .
